# EUROPEAN PATENT APPLICATION

(11) **EP 0 991 276 A2**
(43) Date of publication of application: **05.04.2000**
(21) Application number: 99307646.2
(22) Date of filing: 28.09.1999
(51) Int. Cl.: H04N 7/00

(54) **Video display apparatus and method**

(30) Priority: 29.09.1998 JP 27490298; 07.12.1998 JP 34640098
(71) Applicant: SONY CORPORATION, Tokyo (JP)
(72) Inventor: Shigetomi, Tetsu, Shinagawa-ku, Tokyo (JP)
(74) Representative: Nicholls, Michael John

(57) **Abstract**

A video display apparatus capable of changing a video to be provided to passengers easily by, for example, arranging terminal image display means at predetermined intervals on the wall inside a tunnel and flashing still images of frames composing a moving picture by the image display means, which is applied in a case where a frame-feed video is provided to passengers in a moving train. Image data of still images supplied by the image supplying means is temporarily stored in memories provided in a plurality of terminals and displayed by configuring the terminal image displaying means by, for example, liquid crystal display panels and strobes and changing the still images displayed on the liquid crystal display panels.

## Description

The present invention relates to a video display apparatus and a video display method able to be used to provide passengers in train cars and other moving bodies with frame-feed video from a plurality of terminal devices.

As an image display system in the related art, a video display apparatus configured to provide passengers in train cars passing through a tunnel with frame-feed video from the outside has been proposed (Japanese Unexamined Patent Publication (Kokai) Nos. 5-27197, 5-40448, 5-224617, etc).

Such a video display apparatus is configured by, for example, by arranging terminal image display means at predetermined intervals on the surface of the wall inside a tunnel and flashing still images of frames comprising a moving picture by the image display means to provide passengers in moving train cars (including train crew in addition to the passengers) with frame-feed video.

When the terminal image display means used for this type of a video display apparatus are configured by liquid crystal display panels and strobes, it is possible to change the still images displayed on the liquid crystal display panels, so the video provided to the passengers can be easily changed.

In this case, it may be considered to enable the video provided to the passengers to be easily changed by assigning video RAMs for each of the liquid crystal display panels as in general personal computers, driving the liquid crystal display panels by image data stored in the video RAMs, and changing the contents of the video RAMs in accordance with need.

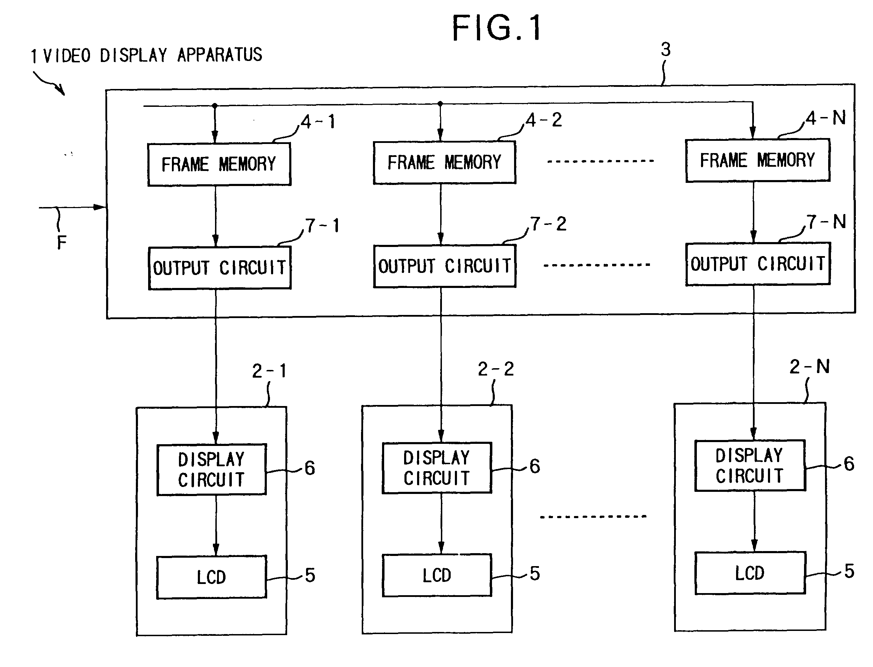

Specifically, as shown in Fig. 1 of the accompanying drawings, it is possible to provide a video display apparatus 1 comprised of terminal devices 2-1 to 2-N arranged at predetermined intervals along the path of a moving body and supplying image data of still images to the terminal devices 2-1 to 2-N by a host device 3. Here, the video display apparatus 1 provides the host device 3 with frame memories 4-1 to 4-N comprised of video RAMs for each of the terminal devices 2-1 to 2-N and distributes the image data transferred from, for example, a higher server to the corresponding frame memories 4-1 to 4-N so as to change the contents of the frame memories 4-1 to 4-N in accordance with need and thus change the video image provided by the video display apparatus 1.

Also, the video display apparatus 1 provides the terminal devices 2-1 to 2-N with liquid crystal display (LCD) panels 5 for displaying the still images, not shown strobes for providing light intermittently to the liquid crystal display panels 5, and display circuits 6 for driving the liquid crystal display panels 5 and provides the host device 3 side with output circuits 7-1 to 7-N for successively reading and outputting the image data stored in the frame memories 4-1 to 4-N corresponding to the drive of the display circuits 6.

Due to this, the video display apparatus 1 flashes still images comprised of the image data stored in the frame memories 4-1 to 4-N at the terminal devices 2-1 to 2-N.

When configuring the video display apparatus 1 in this way, however, there is the disadvantage that the connection between the terminal devices serving as terminal display means and the host device serving as an image supply means becomes complicated. When actually arranging 90 of such terminal devices 2-1 to 2-N in a subway tunnel, the host device 3 placed, for example, at the closest station has to be connected to them by 90 cables.

A first object of the present invention is to provide a video display apparatus and a video display method which can simplify the connection of terminal display means and image supplying means.

A second object of the present invention is to provide a video display apparatus and a video display method which can simplify the connection of terminal devices and an image data changing apparatus and simplify the configuration of the terminal devices.

According to a first aspect of the present invention, there is provided a video display apparatus for flashing still images at predetermined intervals along a path of a moving body so as to provide a frame-feed video comprised of still images to passengers in the moving body, comprising a plurality of terminal display means arranged at predetermined intervals along the path of the moving body and flashing corresponding still images and an image supplying means for supplying image data of the still images corresponding to the plurality of terminal display means; each of the terminal display means comprising a memory means for storing image data of the still images supplied by the image supplying means.

Preferably, the image supplying means temporarily stores the image data of still images in a predetermined memory means and supplies the same to a corresponding terminal display means.

Alternatively, preferably, the memory means of the image supplying means is a frame memory or a disk drive.

Alternatively, preferably, the image supplying means supplies image data supplied from a predetermined image data providing means to the terminal display means.

Alternatively, preferably, the image supplying means adds ID information of a corresponding terminal display means of a destination of the image data and sends the image data and the terminal display means selectively receives as input image data sent to itself based on the ID information and stores the same in the memory means.

Further, the apparatus further comprises a means for detecting a speed of passing of a moving body passing through a region where the plurality of terminal display means are arranged and flashing still images corresponding to the plurality of terminal display means by a cycle in accordance with the detected speed of passing.

Preferably, the apparatus further comprises a first detecting means for detecting a speed of passing on an entry side of the moving body in the region where the plurality of terminal display means are arranged and flashing still images corresponding to the plurality of terminal display means by a cycle in accordance with the detected speed of passing while detecting the speed of passing and inputting the speed detection data and a second detecting means for detecting a speed of passing on an exit side of the moving body in the region where the plurality of terminal display means are arranged and outputting the speed detection data to the first detecting means.

According to a second aspect of the present invention, there is provided a video display method for flashing still images at predetermined intervals along a path of a moving body so as to provide a frame-feed video comprised of the still images to passengers in the moving body, comprising the steps of: supplying image data of corresponding still images from a predetermined image supplying means to a plurality of terminal display means arranged at predetermined intervals along the path of the moving body and flashing corresponding still images, and storing the image data of the supplied still images in the plurality of terminal display means.

According to a third aspect of the present invention, there is provided a video display apparatus for flashing still images at predetermined intervals along the path of a moving body so as to provide a frame-feed video comprised of the still images to passengers in the moving body, comprising a plurality of terminal display means arranged in order at predetermined intervals along the path of the moving body and a plurality of intermediate apparatuses each assigned for every predetermined number of the terminal display means for outputting image data stored in a built-in memory to the assigned terminal display means and displaying the corresponding still images.

Preferably, the apparatus further comprises an image data changing apparatus for changing the image data stored in the plurality of intermediate apparatuses.

Alternatively, preferably, the intermediate apparatus sends image data by serial transfer to the terminal display means.

According to a fourth aspect of the present invention, there is provided a video display method for flashing still images at predetermined intervals along the path of a moving body so as to provide a frame-feed video comprised of the still images to passengers in the moving body, including the steps of assigning an intermediate apparatus for every predetermined number of a plurality of terminal display means arranged at predetermined intervals along with the path of the moving body and flashing correspondeing still images; storing image data corresponding to assigned terminal display means in the intermediate apparatus; and outputting the image data stored in the intermediate apparatus to the terminal displaying means assigned that intermediate apparatuses and displaying the corresponding still images at the terminal display means.

Preferably, the method further comprises appropriately changing the image data stored in the plurality of intermediate apparatuses.

According to the first and second aspects of the present invention, a plurality of terminal display means arranged at predetermined intervals along the path of a moving body and flashing corresponding still images are supplied with image data of corresponding still images from predetermined image supplying means and the image data of the still images supplied from the image supplying means are held in the terminal display means.

By storing the image data of the still images supplied from the image supplying means to the terminal display means, the terminal display means can flash the still images by the stored image data. Due to this, the image supplying means can supply image data through a simple network to the terminal display means and the terminal display means can flash the corresponding still images. Therefore, the connection between the terminal display means and the image supplying means can be simplified.

Further, according to the third and fourth aspects of the present invention, a plurality of terminal devices are successively arranged at predetermined intervals along the path of a moving body, intermediate apparatuses are assigned for each predetermined number of the terminal devices, the terminal devices assigned to each intermediate apparatus are driven by the image data stored in the intermediate apparatus, the corresponding still images are displayed at the terminal devices, and the image data stored by the plurality of intermediate apparatuses is changed by a predetermined image data changing apparatus.

Further, by assigning an intermediate apparatus for every predetermined number of terminal devices and driving the terminal devices assigned to each intermediate apparatus by image data held in the intermediate apparatus to display the corresponding still images on the terminal devices, it is possible to assign part of the drive circuits of the terminal devices in the charge of the intermediate apparatus to display the still images. Due to this, it is sufficient to connect the devices to enable the input and output of the signals necessary for driving the terminal devices. It is possible to simplify the connections between the intermediate apparatuses and the terminals devices by that amount or possible to simplify the configuration of the terminal devices.

Further, by changing the image data stored in the plurality of intermediate apparatuses by a predetermined image data changing apparatus, it is possible to send image data between a smaller number of intermediate apparatuses compared with the number of the terminal devices and a host apparatus and change the still images flashed by the terminal devices and possible to simplify the connection between the terminal devices and image data changing apparatus by that amount.

The invention will be further described by way of example with reference to the accompanying drawings, in which:-
Fig. 1 is a block diagram of a system for transfer of image data when assigning video RAMs of terminal devices to a host device to configure a video display apparatus;
Fig. 2 is a block diagram of the overall configuration of a first embodiment of a tunnel system using a video display apparatus according to the present invention;
Fig. 3 is a block diagram of a system for transfer of image data in the tunnel system according to the first embodiment of the present invention;
Figs. 4A to 41 are views for explaining the operation of the tunnel system;
Fig. 5 is a block diagram of the video display apparatus of Fig. 3 in the case of connecting the host device and terminal devices using a hub;
Fig. 6 is a block diagram of the overall configuration of a second embodiment of a tunnel system using a video display apparatus according to the present invention;
Fig. 7 is a view for explaining a system for transfer of image data in the tunnel system according to the second embodiment of the present invention;
Fig. 8 is a view for explaining a system for transfer of image data in the tunnel system of Fig. 7; and
Figs. 9A to 91 are views for explaining the operation of the tunnel system of Fig. 6.

Below, preferred embodiments will be described with reference to the accompanying drawings.

### First Embodiment

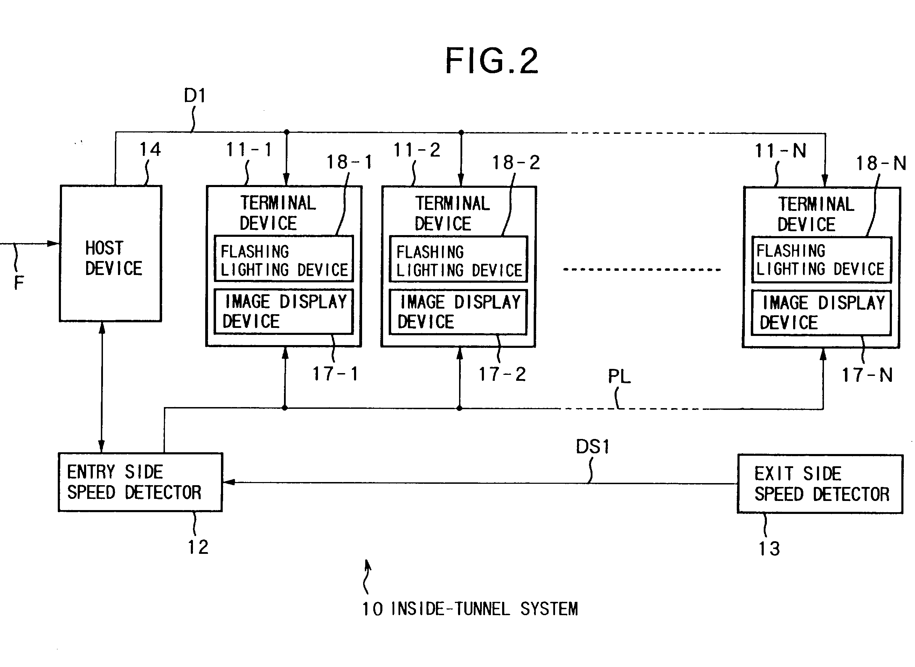

Figure 2 is a block diagram of a first embodiment of the overall configuration of a tunnel system using a video display apparatus according to the present invention.

The tunnel system 10 flashes still images at predetermined intervals along the path of a train so as to provide frame-feed video based on the still images to passengers in the train. Here, the tunnel system 10 receives a file F of a moving picture compressed by the MPEG (Moving Picture Experts Group) format from a higher server and displays a video based on the moving picture.

Accordingly, in the tunnel system 10, terminal devices 11-1 to 11-N for flashing the still images are arranged at predetermined intervals along the wall surface inside the tunnel.

Note that, in the first embodiment, the tunnel system 10 is configured to provide about a three-second moving picture comprised of still images formed by 90 terminal devices 11A to 11N.

Furthermore, the tunnel system 10 provides at an end at the side where the train approaches (hereinafter referred to as the entry side) exactly a predetermined distance from the terminal 11-1 placed at the entry side an entry side speed detector 12 as a first detecting means, while provides at the opposite side where the train leaves (hereinafter referred to as the exit side) exactly a predetermined distance away from the terminal device 11-N placed at the exit side an exit side speed detector 13 as a second detecting means.

Here, the entry side speed detector 12 and the exit side speed detector 13 are arranged so that the distance between the entry side speed detector 12 and the exit side speed detector 13 becomes shorter than the length of the train passing through the tunnel so that when a train passes through it, the front car passes in front of the exit side speed detector 13 before the tail end of the train in passes in front of the entry side speed detector 12. As a result, in the tunnel system 10, when detecting the speed of a passing train by the entry side speed detector 12 and the exit side speed detector 13, the speed of the train can be continuously detected.

The exit side speed detector 13 is comprised of two exit side speed detection sensors comprised of television cameras arranged near the rails. The exit side speed detector 13 compares and processes the results of pictures taken by the two television cameras by a predetermined signal processing circuit so as to detect the passing of train cars based on, for example, windows of the train cars and further detect the speed of passing of the train cars. The exit side speed detector 13 outputs the detected result as speed detection data DSI to the entry side speed detector 12.

In the same way, the entry side speed detector 12 is comprised of two entry side speed detection sensors composed of television cameras arranged near the rails. The entry side speed detector 12 compares and processes the results of the pictures taken by the two television cameras by a predetermined signal processing circuit to detect the passing of the train cars based on for example windows of the train cars and further detect the speed of passing of the train cars.

Furthermore, the entry side speed detector 12 outputs a light emitting pulse PL which intermittently rises in its signal level by a cycle corresponding to the speed of passing of the train cars from the speed of passing on the entry side and the speed of passing on the exit side obtained by the speed detection data DSI to the terminal devices 11-1 to 11-N while the train is passing in front of the terminal devices 11-1 to 11-N.

The terminal devices 11-1 to 11-N comprise image display devices 17-1 to 17-N for displaying still images supplied from the host device 14 and flashing lighting devices 18-1 to 18-N for lighting up the image displaying apparatuses 17-1 to 17-N so that the images of the image displaying apparatuses 17-1 to 17-N can be seen.

In this way, the terminal devices 11-1 to 11-N are provided with image display devices 17-1 to 17-N and flashing lighting devices 18-1 to 18-N at approximately the heights of the windows of the train cars so that the still images of the image display devices 17-1 to 17-N, which are made visible when illuminated by the flashing lighting devices 18-1 to 18-N, can be easily seen by passengers in the train cars.

Among these, each of the image display devices 17-1 to 17-N comprises a transmittance type liquid crystal display panel of a predetermined resolution, a display circuit for driving the liquid crystal display panel, an interface for inputting the image data D1, etc. The image display devices 17-1 to 17-N receive as input from the host device 14 still images respectively assigned to the terminal devices 11-1 to 11-N from image data D1 of a bit map format corresponding to the resolution of the liquid crystal display panels.

The flashing lighting devices 18-1 to 18-N are for example backlight apparatuses arranged on the rear of the liquid crystal display panels in the image display devices 17-1 to 17-N and supply the illumination light to the liquid crystal display panels. In the supply of the light, the flashing lighting devices 18-1 to 18-N intermittently supply the illumination light to the liquid crystal display panels by a cycle corresponding to the speed of passing of the train cars and flash the still images on the liquid crystal display panels by operating in synchronization with the light emitting pulse PL.

As a result, in the tunnel system 10, frame-feed video is provided by the still images of the terminal devices 11-1 to 11-N to the passengers in the train cars passing in front of the terminal devices 11-1 to 11-N from outside the windows. By flashing the still images by a cycle corresponding to the speed of the train cars in the tunnel system 10 at this time, the video composed of the still images is observed by the passengers of the train cars as if in a stationary state.

The host device 14 is arranged at the closest station to the terminal devices 11-1 to 11-N, receives as input a moving picture file F and schedule from a not illustrated higher server, and stores the moving picture file F and the schedule. Furthermore, the host device 14 processes the moving picture file F in accordance with the stored schedule and successively transfers image data of the frames comprising the moving picture to the corresponding terminal devices 17-1 to 17-N. By doing so, the host device 14 supplies the image data D1 of the still images to be displayed on the terminal devices 11-1 to 11-N to the devices.

At this time, the host device 14 outputs the image data of the still images in a bitmap format corresponding to the resolution of the terminal devices 11-1 to 11-N. In this way, the host device 14 generates the image data D1 of the still images corresponding to the resolution of the tunnel system from the data of the moving picture transferred in a common format and transfers the image data D1 of the still images.

Namely, the host device 14 temporarily stores the moving picture file F and schedule transferred from the server via a built-in network interface in a hard disk drive. Furthermore, the host device 14 reads a predetermined file from the hard disk drive in accordance with the schedule and expands the data in the file. The host device 14 performs interpolation and thinning on the image data obtained by the data expansion to convert to the resolution of the liquid crystal display panels inside the tunnel and performs matrix calculations to further convert it to image data composed of red, blue and green colors corresponding to the drive of the liquid crystal display panels. The host device 14 outputs the image data in frame units in the order corresponding to the pixel array of the liquid crystal display panels so as to output the image data D1 of the still images in the bitmap format corresponding to the resolution of the liquid crystal display panels.

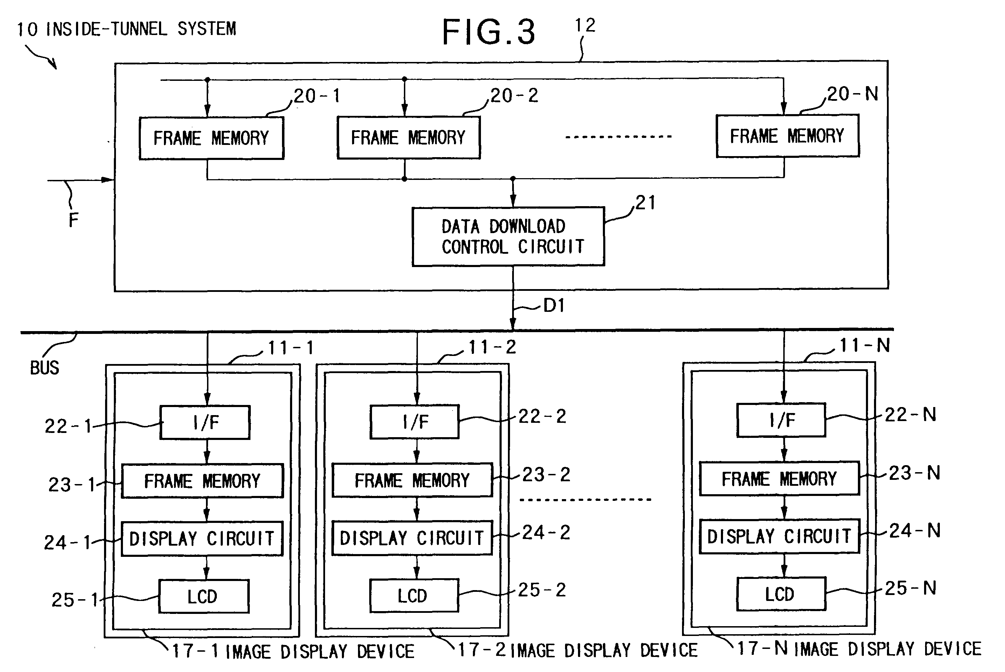

Figure 3 is a block diagram of the relationship of an output system of the host device 14 and the image display devices 17-1 to 17-N of the terminal devices 11-1 to 11-N in the tunnel system 10.

In the tunnel system 10, the output system of the host device 14 and the image display devices 17-1 to 17-N of the terminal devices 11-1 to 11-N are connected by a single bus and configured so as to input and output the image data D1 via the bus. Here, the bus is composed of a serial bus.

Namely, in the host device 14, frame memories 20-1 to 20-N are buffer memories for temporarily storing the image data D1 at the time of outputting the image data D1 to the bus. Here, the frame memories 20-1 to 20-N are provided in exactly the same number as the terminal devices 11-1 to 11-N and store the image data of the still images corresponding to the terminal devices 11-1 to 11-N.

A data download control circuit 21 successively reads the image data of the still images stored in the frame memories 21-1 to 20-N and outputs it to the corresponding terminal devices 11-1 to 11-N. Namely, the data download control circuit 21 reads the image data of the still images stored in the frame memories 20-1 to 20-N at timings corresponding to the transfer speed of the bus and outputs it to the bus. At this time, the data download control circuit 21 adds device IDs of the terminal devices 11-1 to 11-N corresponding to the transfer destinations and outputs them to the bus. By doing so, the image data of the still images is output to the corresponding terminal devices 11-1 to 11-N.

On the other hand, in the image display devices 17-1 to 17-N of the terminal devices 11-1 to 11-N, interface (I/F) circuits 22-1 to 22-N connected to the bus selectively receive as input the image data of the still images sent to them based on the device IDs output to the bus.

The frame memories 23-1 to 23-N are video RAMs of the image display devices 17-1 to 17-N and change the stored contents by the image data of the still images output from the interface circuits 22-1 to 22-N. Furthermore, the frame memories 23-1 to 23-N output image data stored in the order corresponding to the display by the liquid crystal display panels 25-1 to 25-N by control of the display circuits 24-1 to 24-N.

The display circuits 24-1 to 24-N read the image data of the still images stored in the frame memories 23-1 to 23-N in this way in the order corresponding to the pixel array of the liquid crystal display panels 25-1 to 25-N and drive the liquid crystal display panels 25-1 to 25-N by the image data.

The operation due to the above configuration will be explained next.

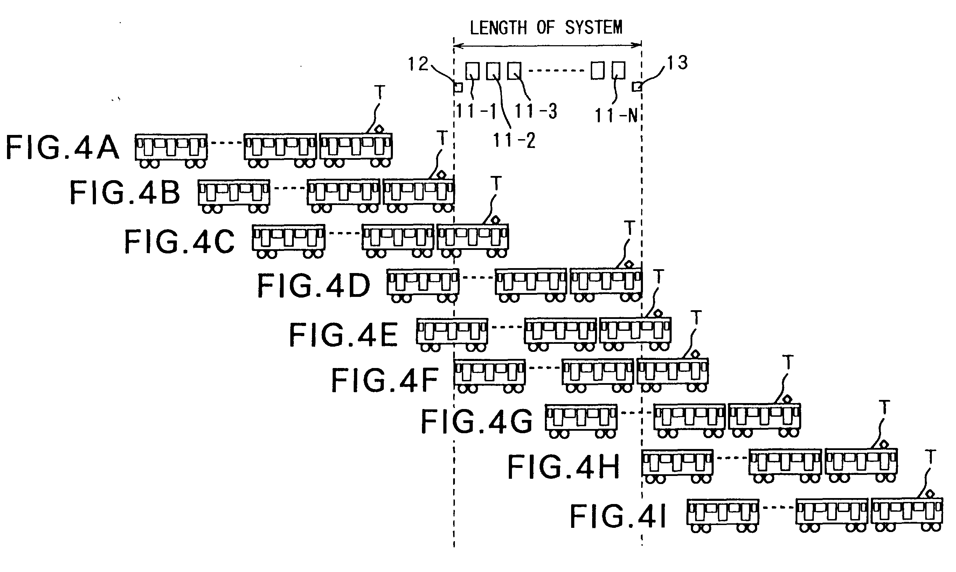

In the tunnel system 10 of Fig. 1, when a train T approaches as shown in Fig. 4A and finally the front car passes in front of the entry side speed detector 12 as shown in Fig. 4B, the passing of the train T is detected at the entry side speed detector 12 and detection of the speed of passing starts. Furthermore, when the train T continues to move along the track as shown in Fig. 4C and finally the front car passes in front of the exit side speed detector 13 as shown in Fig. 4D, the exit side speed detector 13 detects the passing of the car and the speed of passing.

Furthermore, when the train T continues running as shown in Fig. 4E and finally the last car passes in front of the entry side speed detector 12 as shown in Fig. 4F, the passing of the train T is detected by the entry side speed detector 12 and its detection of the speed of passing ends. Then, when the last car passes in front of the exit side speed detector 13 as shown in Fig. 4H, the passing of the train T is detected also by the exit side speed detector 13 and its detection of the speed of passing ends.

In the tunnel system 10, when the passing of the front car is detected by the entry side speed detector 12, a light emitting pulse PL which rises in its signal level in accordance with the speed of passing is output until the last car passes the exit side speed detector 13. In synchronization with the light emitting pulse PL, the still images are flashed by the terminal devices 11-1 to 11-N provided at predetermined intervals in the tunnel in accordance with the moving speed of the train T by intermittently supplying illumination light to the image display devices 17-1 to 17-N composed of the liquid crystal display panels 25-1 to 25-N by the flashing lighting devices 18-1 to 18-N.

In the tunnel system 10, frame-feed video composed of the still images on the terminal devices 11-1 to 11-N is provided in this way to the passengers in the train T.

The video displayed by this tunnel system 10 is supplied from a higher server to the host device 14 by the file F of a moving picture together with a schedule and stored in the hard disk drive. At this time, the amount of data required by the video is reduced and can be stored in the hard disk drive by compressing it in the MPEG format.

In the host devices 14, in accordance with the control by the schedule sent with the file F, a predetermined file is read from the hard disk drive at a predetermined time and expanded. Furthermore, the image data obtained by the data expansion is subjected to interpolation and thinning to be converted to the resolution of the liquid crystal display panels 25-1 to 25-N in the image display devices 17-1 to 17-N of the terminal devices 11-1 to 11-N and further converted to image data D1 in an array suited to the drive of the liquid crystal display panels 25-1 to 25-N and composed of color signals.

In the image data D1, the image data of still images corresponding to the terminal devices 11-1 to 11-N is temporarily stored in the frame memories 20-1 to 20-N serving as buffer memories. Furthermore, the image data is read by the data download control circuit 21 at predetermined timings, device IDs of the destination terminal devices are added, and the results are output to the bus.

In the image display devices 17-1 to 17-N of the terminal devices 11-1 to 11-N, the image data of the still images output to the bus in this way is input to the terminal devices from the interface circuits 22-1 to 22-N of the image display devices 17-1 to 17-N in the terminal devices corresponding to the sending destinations based on the device IDs.

The image data of still images input from the interface circuits 22-1 to 22-N is stored in the frame memories 23-1 to 23-N in place of the image data of the still images stored in the frame memories 23-1 to 23-N until then. As a result, image data in the frame memories 23-1 to 23-N appropriately changed by this is read successively and cyclically in accordance with the display of the liquid crystal display panels 25-1 to 25-N and displayed on the image display devices 17-1 to 17-N. As a result, it becomes possible to change the video to be displayed by successively sending the image data by time division to the corresponding terminal devices via the single transfer path, that is, the bus.

Accordingly, in the tunnel system 10, it is possible to display corresponding still images on the terminal devices 11-1 to 11-N even though image data is supplied by a simple network connecting the host device 14 and the terminal devices 11-1 to 11-N by a single bus. As a result, it is possible to simplify the connection between the terminal devices 11-1 to 11-N and the host device 14.

As explained above, according to the first embodiment, there is provided a tunnel system, that is, a video display apparatus, for providing a frame-feed video to passengers in a moving body by flashing still images, where it is possible to simplify the connection between the terminal displaying means and image supply means by storing and displaying the image data of still images supplied from the host device 14 serving as the image supply means in the terminal devices 11-1 to 11-N serving as the terminal display means.

Note that in the first embodiment, the case was explained of frame memories 20-1 to 20-N used as storing means of the host device 14 to temporarily store the image data D1 in the frame memories 20-1 to 20-N and output the same to the corresponding terminal devices, however, the present invention is not specifically limited to this and may use a hard disk drive as a memory means to temporarily store and output the image data D1.

Also, in the above first embodiment, a case was described of the image data temporarily stored in the memory means of the host device 14 and output to the corresponding terminals, however, the present invention is not limited to this and may successively process a file sent from a higher server and subsequently send the image data of the still images obtained therefrom.

Also, in the above first embodiment, a case was explained of a moving picture file F transferred from the server temporarily stored in a hard disk drive, however, the present invention is not limited to this and may omit the temporary storing processing and directly supply the same to the terminal devices 11-1 to 11-N.

Also, in the above first embodiment, a case was explained of the image data supplied to the terminal devices 11-1 to 11-N from the host device 14 with one serial bus for 90 terminal devices, however, the present invention is not limited to this and a variety of modes of connection can be applied in accordance with need, for example, a case where one serial bus is assigned for every 16 terminal devices for supplying the image data to the terminal devices 11-1 to 11-N.

Also, in the above embodiment, a case was explained of frame memories 23-1 to 23-N are used as video RAMs, however, the present invention is not limited to this and may provide video RAMs separately and, provide a memory means for temporarily storing the separately transferred image data.

Also, in the above first embodiment, a case was explained of image data of still images from the host device 14 output in the bitmap data format, however, the present invention is not limited to this and may compress the bitmap data in a variety of compression formats such as the Joint Photographic Coding Experts Group (JPEG) format and output the same. By doing so, it is possible to shorten the time for outputting the image data from the host device to the corresponding terminal devices.

Also, in the above first embodiment, a case was explained of a moving picture compressed by the MPEG format input to the host device 14, however, the present invention is not limited to this and may be applied in a case where a moving picture compressed in a variety of compression formats is input to the host device, in a case where image data of still images compressed in the JPEG format is input to the host device, and in a case where image data in the color signal format is input to the host device.

Also, in the above first embodiment, a case was described of transmittance type liquid crystal display panels arranged at the height of windows of the train cars and still images flashed from them, however, the present invention is not limited to this and may use a variety of displaying means, such as a case where still images produced by the liquid crystal display panels are flashed by projecting the same on the wall etc. in the tunnel and a case where still images are flashed by a diode array.

Also, in the above first embodiment, a case was explained of a tunnel system configured so that the distance between the terminal devices at the entry side end and the exit side end became shorter than the length of the train, however, the present invention is not limited to this. The distance between the terminal devices at the entry side end and the exit side end may be longer than the length of the train.

Furthermore, in the first embodiment, a case was explained of still images flashed in accordance with the speed of the train so that the video comprised of the still images appears to be stationary to the passengers, however, the present invention is not limited to this and may be broadly applied, for example, to a case where a video comprised of still images is displayed as if it slowly moves when seen from the passengers.

Also, in the first embodiment, a case was described of a moving picture displayed by flashing still images, however, the present invention is not limited to this. Still images, such as signs and advertizement, may be displayed so that the passengers and drivers can easily view them by flashing the same still images.

Furthermore, in the above first embodiment, a case was described of frame-feed video provided to passengers in train cars by flashing still images in the tunnel, however, the present invention is not limited to this and can be widely applied to a case where frame-feed video is provided to passengers in automobiles in a car tunnel, a case where a frame-feed video is provided beside a road or a railway at night, a case where a frame-feed video is provided in an amusement park etc., and other cases where a frame-feed video is provided to passengers in a variety of moving bodies.

When configuring a video display apparatus according to the first embodiment, however, the connection between terminal devices and a host device serving as an image data changing apparatus becomes complex as the terminal devices increase in some cases. In reality, for example in a case where 90 terminal devices 11-1 to 11-N are arranged in a subway tunnel, there is a possibility that the host device 14 placed at the closest station and the 90 terminal devices 11-1 to 11-N cannot be connected with one bus.

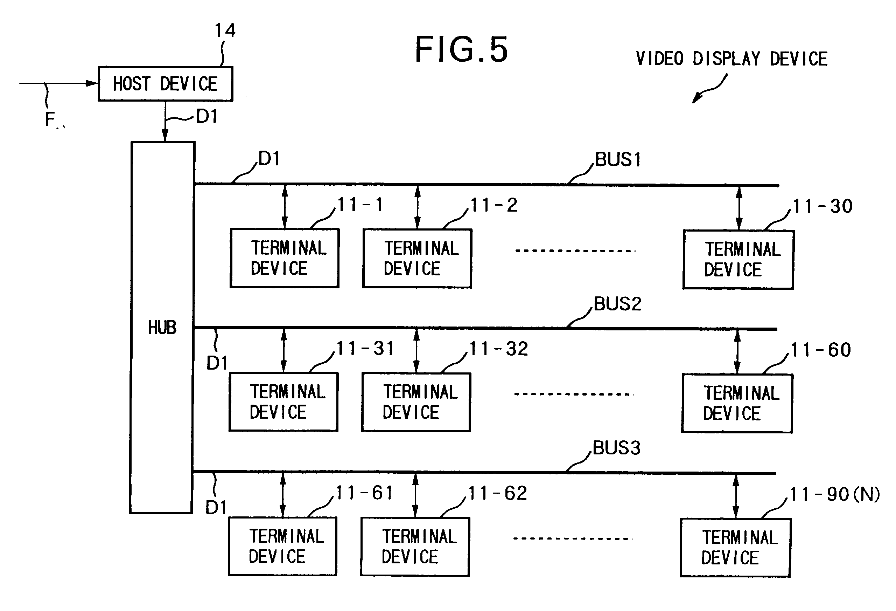

In such a case, a mode of connection shown in Fig. 5, for example, can be selected.

Namely, it is possible to configure the system by applying, for example, an Ethernet of the 10 base-2 mode having a maximum of 30 connection nodes for one cable, connecting the maximum connectable 30 terminal devices to one cable, and connect the 90 terminal devices 11-1 to 11-N by three cables.

Specifically, as shown in Fig. 5, when supposing, for example, N=90, connecting 30 of the terminal devices 11-1 to 11-90 (N) to each of the buses BUS1, BUS2, and BUS3, and connecting the three buses BUS1, BUS2, and BUS3 and the host device 14 by using a hub or connecting them using a repeater etc. instead of the hub.

Even when configured in this way, the connection between the host device 14 serving as the image supply means and the terminal devices 11-1 to 11-N serving as the terminal display means can be tremendously simplified.

### Second Embodiment

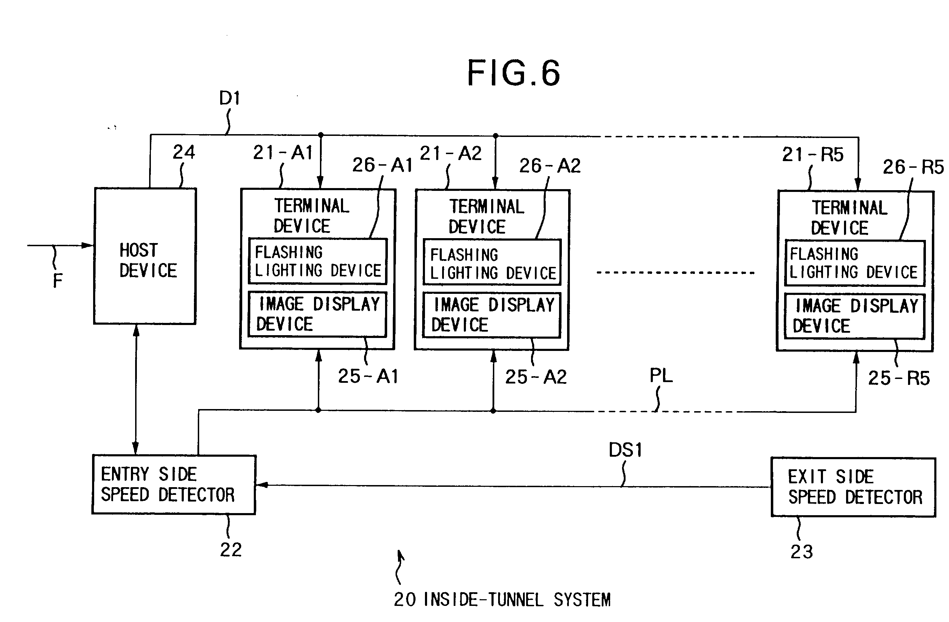

Figure 6 is a block diagram of a second embodiment of the overall configuration of a tunnel system using a video display apparatus according to the present invention.

The second embodiment is different from the first embodiment in that, in the tunnel system, N number of terminal devices arranged along the inside wall of the tunnel, for example, 90 terminal devices, are arranged in groups of five from the entry side, an intermediate apparatus is assigned for each group, and the terminal devices are driven by the intermediate apparatuses.

The configuration of the tunnel system, transfer of image data, and the operations according to the second embodiment will be explained in order with reference to Fig. 6 to Figs. 9A to 9I below.

In the tunnel system 20, a frame-feed video comprised of still images is provided to passengers in train cars by flashing still images at predetermined intervals along the path of the train. The tunnel system 20 receives a moving picture file F compressed in the MPEG format from a higher server and displays the moving picture as a frame-feed video.

In the tunnel system 20, terminal devices 21-A1 to 21-R5 are arranged along the wall inside the tunnel to flash the still images at predetermined intervals. Note that in the second embodiment, the tunnel system 20 is configured to provide a three-second moving picture comprised of still images flashed from 90 terminal devices 21-A1 to 21-R5.

Furthermore, in the tunnel system 20, an entry side speed detector 22 is arranged at the entry side exactly a predetermined distance away from the terminal 21-A1 placed at the end of the entry side, while an exit side speed detector 23 is arranged at the exit side exactly a predetermined distance away from the terminal device 21-R5 placed at the end of the exit side.

Here, the entry side speed detector 22 and the exit side speed detector 23 are arranged so that the distance between the entry side speed detector 22 and the exit side speed detector 23 becomes shorter than the length of the train passing through the tunnel so that when a train passes through it, the front car passes in front of the exit side speed detector 23 before the tail end of the train passes in front of the entry side speed detector 22. As a result, in the tunnel system 20, when detecting the speed of a passing car by the entry side speed detector 22 and the exit side speed detector 23, the speed of the train can be continuously detected.

The exit side speed detector 23 is provided with two exit side speed detection sensors composed of television cameras arranged near the rails. The exit side speed detector 23 compares and processes the results of pictures taken by the two television cameras by a predetermined signal processing circuit so as to detect the passing of train cars based on, for example, windows of the train cars and further detect the speed of passing of the train cars. The exit side speed detector 23 outputs the detected result as speed detection data DSI to the entry side speed detector 22.

In the same way, the entry side speed detector 22 is comprised of two entry side speed detection sensors composed of television cameras arranged near the rails. The entry side speed detector 22 compares and processes the results of the pictures taken by the two television cameras by a predetermined signal processing circuit to detect the passing of the train cars based on for example windows of the train cars and further detect the speed of passing of the train cars.

Furthermore, the entry side speed detector 22 outputs a light emitting pulse PL which intermittently rises in its signal level by a cycle corresponding to the speed of passing of the train cars from the speed of passing on the entry side and the speed of passing on the exit side obtained by the speed detection data DSI to the terminal devices 21-A1 to 21-R5 while the train is passing in front of the terminal devices 21-A1 to 21-R5.

The terminal devices 21-A1 to 21-R5 comprise image display devices 25-A1 to 25-R5 for displaying still images supplied from the host device 24 and flashing lighting devices 26-A1 to 26-R5 for lighting up the image displaying apparatuses 25-A1 to 25-R5 so that the images of the image displaying apparatuses 25-A1 to 25-R5 can be seen. In this way, the terminal devices 21-A1 to 21-R5 are provided with image display devices 25-A1 to 25-R5 and flashing lighting devices 26-A1 to 26-R5 at approximately the heights of the windows of the train cars so that the still images of the image display devices 25-A1 to 25-R5, which are made visible when illuminated by the flashing lighting devices 26-A1 to 26-R5, can be easily seen by passengers in the train cars.

Among these, each of the image display devices 25-A1 to 25-R5 comprises a transmittance type liquid crystal display panel of a predetermined resolution etc. and displays a corresponding still images by a liquid crystal display panel.

The flashing lighting devices 26-A1 to 26-R5 are for example backlight apparatuses arranged on the rear of the liquid crystal display panels in the image display devices 25-A1 to 25-R5 and supply illumination light to the liquid crystal display panels. In the supply of the light, the flashing lighting devices 26-A1 to 26-R5 intermittently supply illumination light to the liquid crystal display panels by a cycle corresponding to the speed of passing of the train cars and flash the still images on the liquid crystal display panels by operating in synchronization with the light emitting pulse PL.

As a result, in the tunnel system 20, frame-feed video is provided by the still images of the terminal devices 21-A1 to 21-R5 to the passengers in the train cars passing in front of the terminal devices 21-A1 to 21-R5 from outside the windows. By flashing the still images by a cycle corresponding to the speed of the train cars in the tunnel system 20 at this time, a video composed of the moving picture formed by this frame feed is observed by the passengers of the train cars as if in a stationary state.

The host device 24 is arranged at the closest station to the terminal devices 21-A1 to 21-R5, receives as input a moving picture file F and schedule from a not illustrated higher server, and stores the moving picture file F and the schedule. Furthermore, the host device 24 processes the moving picture file F in accordance with the stored schedule and successively transfers image data of the frames comprising the moving picture to the corresponding terminal devices 21-A1 to 21-R5.

At this time, the host device 24 outputs the image data D1 of the still images in the bitmap format corresponding to the resolution of the terminal devices 21-A1 to 21-R5. In this way, the host device 24 generates the image data D1 of the still images corresponding to the resolution of the tunnel system from the data of the moving picture transferred in a common format and transfers the image data D1 of the still images.

Namely, the host device 24 temporarily stores the moving picture file F and schedule transferred from the server via a built-in network interface to a hard disk drive. Furthermore, the host device 24 reads a predetermined file from the hard disk drive in accordance with the schedule and expands the data in the file. The host device 24 performs interpolation and thinning on the image data obtained by the data expansion to convert it to the resolution of the tunnel system 20 and further performs matrix calculation to convert it to image data composed of red, blue, and green colors corresponding to the drive of the liquid crystal display panel. The host device 24 outputs the image data in frame units in an order corresponding to the pixel array of the liquid crystal display panels to output the image data D1 of the still images in the bitmap format corresponding to the resolution of the liquid crystal display panels.

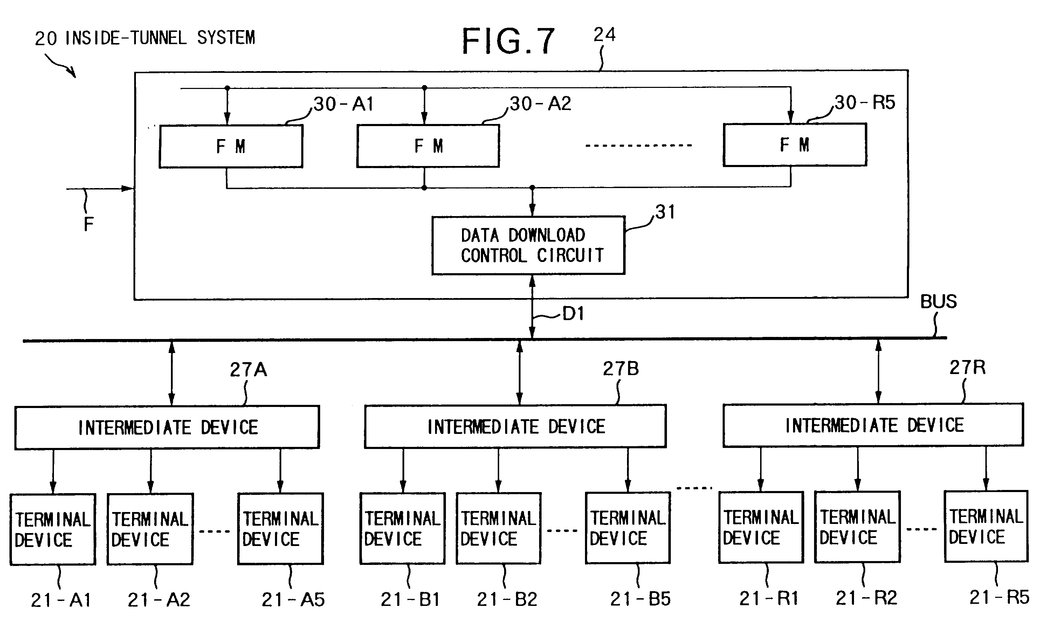

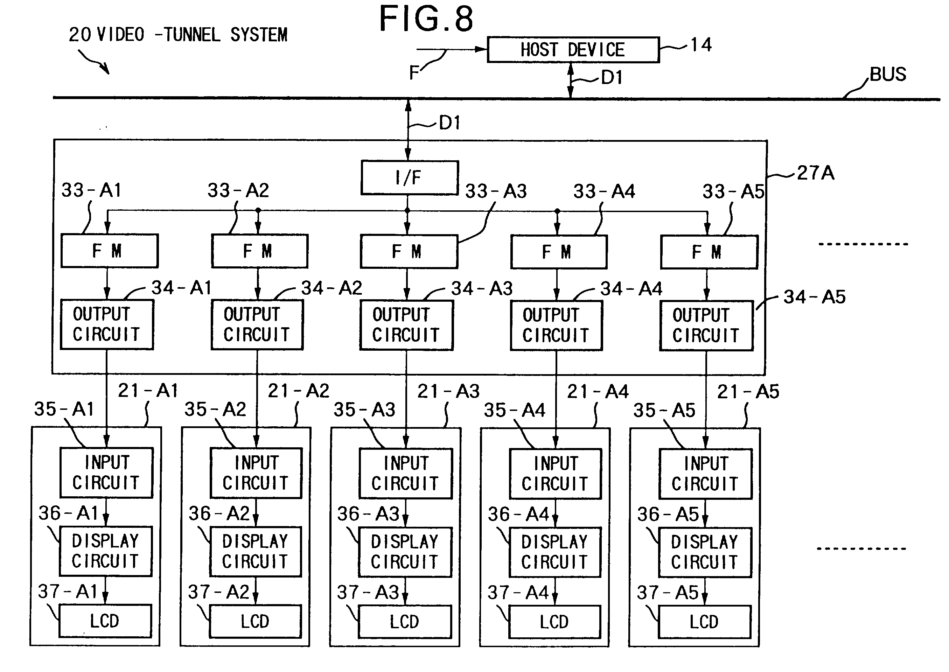

Figures 7 and 8 are block diagrams for explaining the system for transfer of the image data from the host device 24 to the terminal devices 21-A1 to 21-R5.

In the tunnel system 20, 90 terminal devices 21-A1 to 21-R5 arranged along the wall inside the tunnel are divided into groups of five terminal devices from the entry side to form 18 groups from A to R, intermediate apparatuses 27A to 27R are respectively assigned to the groups, and the intermediate apparatuses 27A to 27R are used to drive the terminal devices 21-A1 to 21-R5.

Namely, in the host device 24, frame memories (FM) 30-A1 to 30-R5 are arranged in the same number as the terminal devices 21-A1 to 21-R5 and compose buffer memories for temporarily storing the image data D1 of still images to be displayed on the terminal devices 21-A1 to 21-R5.

A data download control circuit 31 successively reads the image data D1 of the still images stored in the frame memories 30-A1 to 30-R5 and outputs the same to the bus in accordance with schedule. As a result, the data download control circuit 31 sends the image data D1 of a moving picture to be newly provided in a format suitable to the liquid crystal display panels when the time arrives for changing the moving picture provided to the passengers in the train cars.

The intermediate apparatuses 27A to 27R are arranged near the assigned five terminal devices. Here, since the intermediate apparatuses 27A to 27R are configured identically except for the difference of the terminal devices handled, here only the terminal device 27A will be explained. The explanation of the other intermediate apparatuses 27B to 27R will be omitted.

Namely, in the intermediate apparatus 27A in Fig. 8, an interface circuit (I/F) 32 selectively receives as input the image data D1 of still images to be displayed at the assigned terminal devices 21-A1 to 21-A5 from the bus. Furthermore, the interface circuit 32 outputs the selectively input image data D1 to the frame memories (FM) 33-A1 to 33-A5.

Here, the frame memories 33-A1 to 33-A5 are arranged in the same number as that of the terminal devices 21-A1 to 21-A5 to which the intermediate apparatus 27A is assigned and change the contents stored from the image data D1 of still images output from the interface circuit 32. Furthermore, the frame memories 33-A1 to 33-A5 successively and cyclically output the image data D1 of still images stored in the order corresponding to the pixel array of the liquid crystal display panel under the control of the output circuits 34-A1 to 34-A5. As a result, the frame memories 33-A1 to 33-A5 compose a video RAM for still images to be displayed on the terminal devices 21-A1 to 21-A5.

The output circuits 34-A1 to 34-A5 perform parallel-serial conversion on the image data D1 output from the frame memories 33-A1 to 33-A5 and output the same to the terminal devices 21-A1 to 21-A5.

On the other hand, in the terminal devices 21-A1 to 21-A5, the input circuits 35-A1 to 35-A5 perform serial-parallel conversion on the image data D1 output from the intermediate apparatus 27A and output to the display circuits 36-A1 to 36-A5. The display circuits 36-A1 to 36-A5 drive the liquid crystal display panels (LCD) 37-A1 to 37-A5 by the image data D1 output from the input circuits 35-A1 to 35-A5 in the same way and display the still images by image data D1 on the liquid crystal display panels 37-A1 to 37-A5. The drive circuits of the liquid crystal display panels 37-A1 to 37-A5 are configured in this way by the frame memories 33-A1 to 33-A5, output circuits 34-A1 to 34-A5, input circuits 35-A1 to 35-A5, and display circuits 36-A1 to 36-A5, while the intermediate apparatus 27A is configured to be assigned part of the drive circuits of the assigned liquid crystal display panels 37-A1 to 37-A5.

The operation due to the above configuration will be explained next.

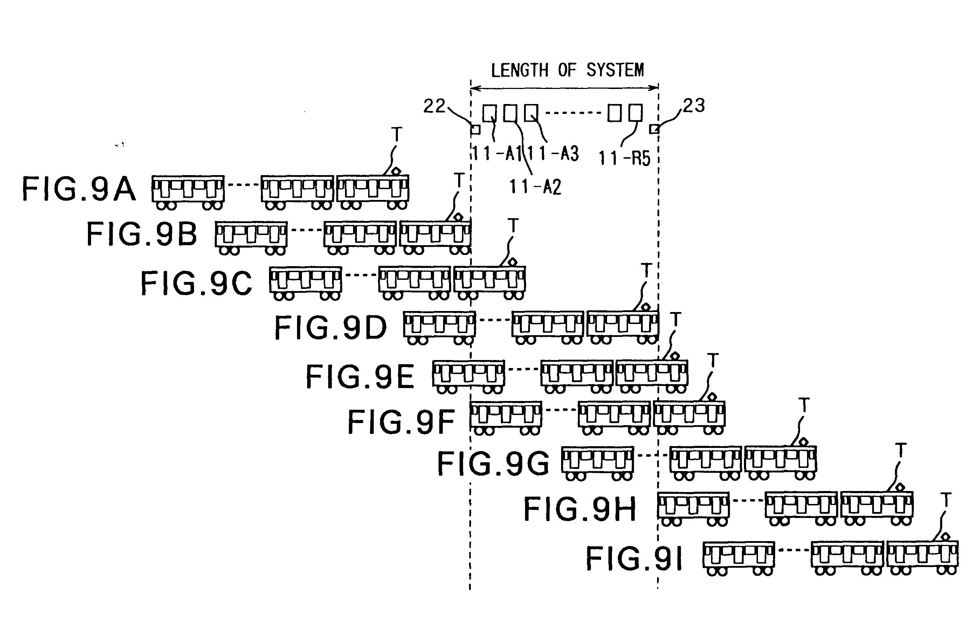

In the tunnel system 20 in Fig. 6, when a train T approaches as shown in Fig. 9A and finally the front car passes in front of the entry side speed detector 22 as shown in Fig. 9B, the passing of the train T is detected by the entry side speed detector 22 and detection of the speed of passing starts. Furthermore, when the train T continues to run as shown in Fig. 9C and finally the front car passes in front of the exit side speed detector 23 as shown in Fig. 9D, the exit side speed detector 23 detects the passing and the speed of passing of the train T.

Furthermore, when the train T continues to run as shown in Fig. 9E and finally the last car passes in front of the entry side speed detector 22, the entry side speed detector 22 detects the passing of the train T and its detection of the speed of passing ends. Then, when the last car passes in front of the exit side speed detector 23 as shown in Fig. 9H, the exit side speed detector 23 also detects the passing of the train T and its detection of the speed of passing ends.

In the tunnel system 20, when the passing of the front car is detected by the entry side speed detector 22 in this way, the light emitting pulse PL rising in signal level in accordance with the speed of passing is output until the last car passes the exit side speed detector 23, the flashing lighting devices 26-A1 to 26-R5 intermittently supply illumination light to the image display devices 25-A1 to 25-R5 composed of the liquid crystal display panels 37-A1 to 37-R5 in synchronization with the luminous pulse PL, and still images are thereby flashed on the terminal devices 21-A1 to 21-R5 arranged at predetermined intervals inside the tunnel in accordance with the moving speed of the train T.

In the tunnel system 20, a frame-feed video composed of the still images of the terminal devices 21-A1 to 21-R5 is provided to the passengers in the train T by the above.

The video provided by the terminal devices 21-A1 to 21-R5 in this way is stored in the frame memories 33-A1 to 33-R5 built in the intermediate apparatuses 27A to 27R as image data D1 of still images. The image data D1 stored in the frame memories 33-A1 to 33-R5 is successively and cyclically read by the output circuits 34-A1 to 34-R5 and output to the terminal devices 21-A1 to 21-R5.

In the terminal devices 21-A1 to 21-R5, the image data D1 is input through the input circuits 35-A1 to 35-R5. Based on the image data D1, the liquid crystal display panels 37-A1 to 37-R5 are driven by the display circuits 36-A1 to 36-R5.

As a result, in the tunnel system 20, a part of drive circuits of the liquid crystal display panels 37-A1 to 37-R5 is assigned to the intermediate apparatuses 27A to 27R, and the intermediate apparatuses 27A to 27R and the terminal devices 21-A1 to 21-R5 are connected in order that only signals necessary for driving the liquid crystal display panels 37-A1 to 37-R5 are input and output. Therefore, in the tunnel system 20, the connection between the intermediate apparatuses 27A to 27R and the terminal devices 21-A1 to 21-R5 can be simplified. Also, since it is not necessary to assign any communication function to the terminal devices 21-A1 to 21-R5, the configuration of the same can be made simpler.

Furthermore, at this time, the image data D1 is subjected to parallel-serial conversion and output to the terminal devices 21-A1 to 21-R5. Thus, in the tunnel system 20, the number of cables connecting the intermediate apparatuses 27A to 27R and the terminal devices 21-A1 to 21-R5 can be reduced so that the connection between the intermediate apparatuses 27A to 27R and the terminal devices 21-A1 to 21-R5 can be made simpler.

The video displayed by the tunnel system 20 is supplied as a file F from a higher server to the host device 24 and stored in a hard disk drive. In the host device 24, the file F is read from the hard disk drive at a predetermined time, converted into the image data D1 in a format suitable to being displayed on the liquid crystal display panels 37-A1 to 37-R5, and temporarily stored in the frame memories 30-A1 to 30-R5, respectively. In the tunnel system 20, the image data D1 is successively read by the data download control circuit 31 and output to the intermediate apparatuses 27A to 27R, the contents of the frame memories 33-A1 to 33-R5 of the intermediate apparatuses 27A to 27R are change, and the video to be provided to the passengers is changed.

Therefore, in the tunnel system 20, by transferring the image data between the intermediate apparatuses 27A to 27R of a number less than the number of terminal devices 21-A1 to 21-R5 and the host devices 24, the still images flashed on the terminal devices 21-A1 to 21-R5 can be changed. As a result, when the number of the terminal devices 21-A1 to 21-R5 is large, the video to be provided to the passengers can be changed by data communication between the intermediate apparatuses 21-A1 to 21-R5 of a number less than the terminal devices 21-A1 to 21-R5, therefore, the connection between the terminal devices 21-A1 to 21-R5 and the host device 24 can be made simpler.

As explained above, according to the second embodiment, by grouping the terminal devices and assigning intermediate apparatuses thereto, driving the terminal devices by the assigned intermediate apparatuses to display still images on the terminal devices, and changing the image data stored in the intermediate apparatuses by the host device serving as an image data changing apparatus, it is possible to simplify the connection between the terminal devices and the image data changing apparatus and simplify the configuration of the terminal devices.

Note that in the above second embodiment, a case was described of dividing 90 terminal devices 21-A1 to 21-R5 into groups of five, however, the present invention is not limited to this and can be widely applied to cases of various numbers of terminal devices. Note that, in such cases, by changing the size of each group in accordance with the number of terminal devices and by adjusting the number of intermediate apparatuses in order to be within the maximum number of connection nodes of buses connecting the host device and the intermediate apparatuses, it is possible to obtain the same efficiency as the above embodiment.

Also, in the above second embodiment, a case was described of frame memories 30-A1 to 30-R5 used as memory means of the host device 24, however, the present invention is not limited to this and can be applied broadly to cases of a hard disk drive used as memory means and other various memory means.

Also, in the above second embodiment, a case was described of the image data D1 temporarily stored in the memory means of the host device 24 and successively sent, however, the present invention is not limited to this. A file sent from a higher server may be successively processed and the thus obtained image data of the still images successively sent.

Also, in the above second embodiment, a case was described of the image data of still images output from the host device 24 in the bitmap format, however, the present invention is not limited to this. The bitmap data may be output compressed by a variety of compression formats such as the JPEG. By doing this, it becomes possible to shorten the time for outputting the image data from the corresponding intermediate apparatuses 27A to 27R.

Furthermore, in the above second embodiment, a variety of modifications the same as the above first embodiment can be applied as described below.

Namely, a case was described where a moving picture compressed in the MPEG format was input to the host device 24, however, the present invention is not limited to this. In the same way as described in the case of the above first embodiment, it may be widely applied to a case of a moving picture compressed by a variety of methods input to the host device, a case of image data of still images compressed in the JPEG format input to the host device, a case of image data in the format of color signals input to the host device, etc.

Also, in the above second embodiment, a case was described of transmittance type liquid crystal display panels arranged at the height of the windows of the train cars to flash still images, however, the present invention is not limited to this and, for example, may be broadly applied to a variety of display methods, such as a case of still images formed by liquid crystal display panels projected on the wall etc. inside a tunnel to flash the still images, a case of still images flashed by a diode array, etc.

Also, in the above second embodiment, a case was described of a tunnel system configured so that the distance between the terminal devices at the end of the entry side and the end of the exit side becomes shorter than the length of a train, however, the present invention is not limited to this and conversely the distance between the terminal devices at the end of the entry side and the end of the exit side may be longer than the length of the train.

Furthermore, in the above second embodiment, a case was explained of still images flashed in accordance with the speed of the cars in order that the video comprised of the still images appears stationary when viewed by the passengers, however, the present invention is not limited to this and, for example, may be broadly applied to a case where the video comprised of the still images appears to slowly move when viewed by the passengers.

Also, in the above second embodiment, a case was described of a moving picture displayed by flashing still images, however, the present invention is not limited to this and may flash identical still images so as to display still images such as signs and advertisements so that the passengers and drivers can easily view them.

Furthermore, in the above second embodiment, Furthermore, in the above first embodiment, a case was described of frame-feed video provided to passengers in train cars by flashing still images in the tunnel, however, the present invention is not limited to this and can be widely applied to a case where frame-feed video is provided to passengers in automobiles in a car tunnel, a case where a frame-feed video is provided beside a road or a railway at night, a case where a frame-feed video is provided in an amusement park etc., and other cases where a frame-feed video is provided to passengers in a variety of moving bodies.

While the invention has been described with reference to specific embodiment chosen for purpose of illustration, it should be apparent that numerous modifications could be made thereto by those skilled in the art without departing from the basic concept and scope of the invention.

## Claims

1. A video display apparatus for flashing still images at predetermined intervals along a path of a moving body so as to provide a frame-feed video comprised of still images to passengers in the moving body, comprising:
a plurality of terminal display means arranged at predetermined intervals along the path of the moving body and flashing corresponding still images and
an image supplying means for supplying image data of said still images corresponding to said plurality of terminal display means;
each of said terminal display means comprising a memory means for storing image data of said still images supplied by said image supplying means.

2. A video display apparatus as set forth in claim 1, wherein said image supplying means temporarily stores said image data of still images in a predetermined memory means and supplies the same to a corresponding terminal display means.

3. A video display apparatus as set forth in claim 2, wherein said memory means of the image supplying means is a frame memory.

4. A video display apparatus as set forth in claim 2, wherein said memory means of the image supplying means is a disk drive.

5. A video display apparatus as set forth in claim 1, wherein said image supplying means supplies image data supplied from a predetermined image data providing means to said terminal display means.

6. A video display apparatus as set forth in any one of the preceding claims, wherein:
said image supplying means adds ID information of a corresponding terminal display means of a destination of the image data and sends the image data and
said terminal display means selectively receives as input image data sent to itself based on said ID information and stores the same in said memory means.

7. A video display apparatus as set forth in any one of the preceding claims, further comprising a means for detecting a speed of passing of a moving body passing through a region where said plurality of terminal display means are arranged and flashing still images corresponding to said plurality of terminal display means by a cycle in accordance with the detected speed of passing.

8. A video display apparatus as set forth in any one of claims 1 to 6, further comprising:
a first detecting means for detecting a speed of passing on an entry side of said moving body in the region where said plurality of terminal display means are arranged and flashing still images corresponding to said plurality of terminal display means by a cycle in accordance with the detected speed of passing while detecting the speed of passing and inputting the speed detection data and
a second detecting means for detecting a speed of passing on an exit side of said moving body in the region where said plurality of terminal display means are arranged and outputting said speed detection data to said first detecting means.

9. A video display method for flashing still images at predetermined intervals along a path of a moving body so as to provide a frame-feed video comprised of said still images to passengers in said moving body, comprising the steps of:
supplying image data of corresponding still images from a predetermined image supplying means to a plurality of terminal display means arranged at predetermined intervals along said path of the moving body and flashing corresponding still images and
storing the image data of said supplied still images in said plurality of terminal display means.

10. A video display method as set forth in claim 9, wherein said image supplying means temporarily stores the image data of said still images in a predetermined memory means and supplies the same to said corresponding terminal display means.

11. A video display method as set forth in claim 10, wherein the memory means of said image supplying means is a frame memory.

12. A video display method as set forth in claim 10, wherein the memory means of said image supplying means is a disk drive.

13. A video display method as set forth in claim 9, wherein said image supplying means supplies image data supplied from a predetermined image data providing means to said terminal display means.

14. A video display apparatus for flashing still images at predetermined intervals along the path of a moving body so as to provide a frame-feed video comprised of said still images to passengers in said moving body, comprising:
a plurality of terminal display means arranged in order at predetermined intervals along said path of the moving body and
a plurality of intermediate apparatuses each assigned for every predetermined number of said terminal display means for outputting image data stored in a built-in memory to the assigned terminal display means and displaying the corresponding still images.

15. A video display apparatus as set forth in claim 14, further comprising an image data changing apparatus for changing said image data stored in said plurality of intermediate apparatuses.

16. A video display apparatus as set forth in claim 14 or 15, wherein said intermediate apparatus sends image data by serial transfer to said terminal display means.

17. A video display apparatus as set forth in claim 14, further comprising a means for detecting a speed of passing of a moving body passing through a region where said plurality of terminal display means are arranged and flashing still images corresponding to said plurality of terminal display means by a cycle in accordance with the detected speed of passing.

18. A video display apparatus as set forth in claim 14, 15 or 16, further comprising:
a first detecting means for detecting a speed of passing on an entry side of said moving body in the region where said plurality of terminal display means are arranged and flashing still images corresponding to said plurality of terminal display means by a cycle in accordance with the detected speed of passing while detecting the speed of passing and inputting the speed detection data and
a second detecting means for detecting a speed of passing on an exit side of said moving body in the region where said plurality of terminal display means are arranged and outputting said speed detection data to said first detecting means.

19. A video display method for flashing still images at predetermined intervals along the path of a moving body so as to provide a frame-feed video comprised of said still images to passengers in said moving body, comprising the steps of:
assigning an intermediate apparatus for every predetermined number of a plurality of terminal display means arranged at predetermined intervals along said path of the moving body and flashing corresponding still images;
storing image data corresponding to assigned terminal display means in said intermediate apparatus; and
outputting the image data stored in said intermediate apparatus to said terminal display means assigned that intermediate apparatuses and displaying said corresponding still images at said terminal display means.

20. A video display method as set forth in claim 19, further comprising a step of appropriately changing said image data stored in said plurality of intermediate apparatuses.

21. A video display method as set forth in claim 19 or 20, further comprising a step of sending image data by serial transfer from said intermediate apparatuses.
